# FASCICULE DE BREVET EUROPEEN

(11) **EP 3 945 032 B1**
(45) Date de publication et mention de la délivrance du brevet: **07.09.2022**
(21) Numéro de dépôt: 21183238.1
(22) Date de dépôt: 01.07.2021
(51) Int. Cl.: B64D 27/12, B64D 27/26, B64D 27/18

(54) **ASSEMBLAGE D'UN MÂT AVEC UNE AILE D'AÉRONEF**
ZUSAMMENBAU EINER AUFHÄNGESÄULE UND EINES FLÜGELS EINES LUFTFAHRZEUGS
ASSEMBLY OF A MAST WITH AN AIRCRAFT WING

(30) Priorité: 31.07.2020 FR 2008174
(43) Date de publication de la demande: 02.02.2022
(73) Titulaire: AIRBUS OPERATIONS (S.A.S.), 31060 Toulouse (FR)
(72) Inventeur: BERJOT, Michael, 31060 TOULOUSE (FR); GUENEAU, Germain, 31060 TOULOUSE (FR); ROBIGLIO, Thomas, 31060 TOULOUSE (FR); PAUTIS, Olivier, 31060 TOULOUSE (FR); FRENOT, Laurent, 31060 TOULOUSE (FR)
(74) Mandataire: Sarraméa, Claude

(56) Documents cités:
- EP-A1- 2 426 051
- EP-A1- 3 628 594
- FR-A1- 2 909 973
- US-A1- 2019 283 890
- US-A1- 2020 017 227

## Description

La présente invention concerne un assemblage d'un mât avec une aile d'aéronef.

De manière classique, un aéronef comprend au moins un turboréacteur fixé sous chacune de ses ailes au moyen d'un mât constitué d'une structure primaire sous la forme d'un caisson rigide. Le mât est attaché de manière isostatique sous l'aile au moyen d'organes de fixations du mât à l'aile. Les organes de fixations sont constitués d'un système avant de fixation disposé globalement à mi-longueur de la structure primaire, un système arrière de fixation disposé à l'arrière de la structure primaire, et un système intermédiaire de fixation, disposé entre les systèmes de fixation avant et arrière.

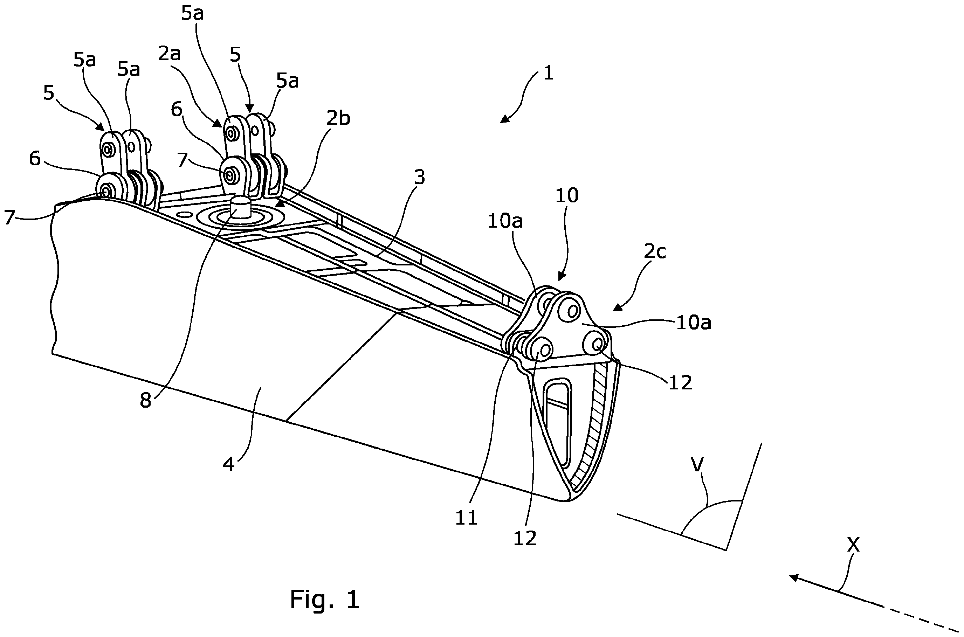

En référence avec la figure 1, le système avant de fixation 2a, situé sur le longeron supérieur 3 du mât 1, comprend deux paires de bielles deux-points 5, réparties de chaque côté d'un plan médian longitudinal V de la structure primaire 4 séparant cette dernière en deux parties gauche et droite. Chaque bielle deux-points 5a s'étend parallèlement à l'axe longitudinal X du mât 1 et les deux bielles 5a d'une paire de bielles 5 sont, d'une part, reçues entre les branches d'une chape de fixation 6 à trois branches solidaire de la structure primaire 4 et montées articulées à ladite chape via un axe 7 orienté perpendiculairement au plan médian longitudinal V, et d'autre part destinées à être articulée à l'aile (non représentée).

Le système de fixation intermédiaire 2b, situé sur le longeron supérieur 3 du mât 1 comprend un pion 8 de type spigot, qui s'étend dans le plan médian longitudinal V et est destiné à être inséré dans un alésage prévu à cet effet dans l'aile.

Le système arrière de fixation 2c, également situé sur le longeron supérieur 3 du mât 1 comprend deux paires de bielles trois-points 10, dites bielles triangles. Chaque bielle triangle 10a a sensiblement la forme d'un triangle isocèle avec un alésage traversant au niveau de chaque angle. Chacune bielle triangle 10 s'étend perpendiculairement au plan médian longitudinal V. De chaque côté de ce plan, et de manière symétrique par rapport à ce dernier, les deux paires de bielles triangles 10 prennent en sandwich une patte de fixation 11 solidaire de la structure primaire 4 et sont articulées à cette dernière par une liaison de type chape avec un axe 12 orienté longitudinalement. Chaque bielle triangle 10a est en outre destinée à être articulée en un point à l'aile.

Cette configuration donne satisfaction mais implique une distance importante, entre l'aile et le longeron supérieur pour pouvoir intégrer le système arrière de fixation. La forme spécifique des bielles triangles ne permet pas de réduire davantage cette distance.

Il existe un besoin de trouver un design de système arrière de fixation qui soit plus compact afin de réduire l'encombrement de l'assemblage du mât à l'aile.

Un objet de la présente invention est de répondre en tout ou partie à ce besoin. A cet effet, l'invention concerne un assemblage d'un mât avec une aile d'aéronef tel que revendiqué à la revendication 1. La demande de brevet EP2426051 décrit le préambule de la revendication 1.

Avec un tel assemblage, l'encombrement du système arrière de fixation est réduit. Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la figure 1, déjà décrite, est une vue perspective de l'arrière d'un mat d'aéronef avec des organes de fixations du mât à une aile d'aéronef, selon l'état de l'art ;
- la figure 2 est une vue de côté d'un assemblage d'un mat avec une aile d'aéronef au moyen d'organes de fixations du mât à une aile comprenant un système arrière de fixation selon un premier mode de réalisation de l'invention ;
- la figure 3 est une vue en perspective de la zone Z de la figure 2 montrant en détail le système arrière de fixation selon le premier mode de réalisation de l'invention ;
- la figure 4 est une vue éclatée et en perspective du système arrière de fixation représenté à la figure 3, selon le premier mode de réalisation de l'invention.

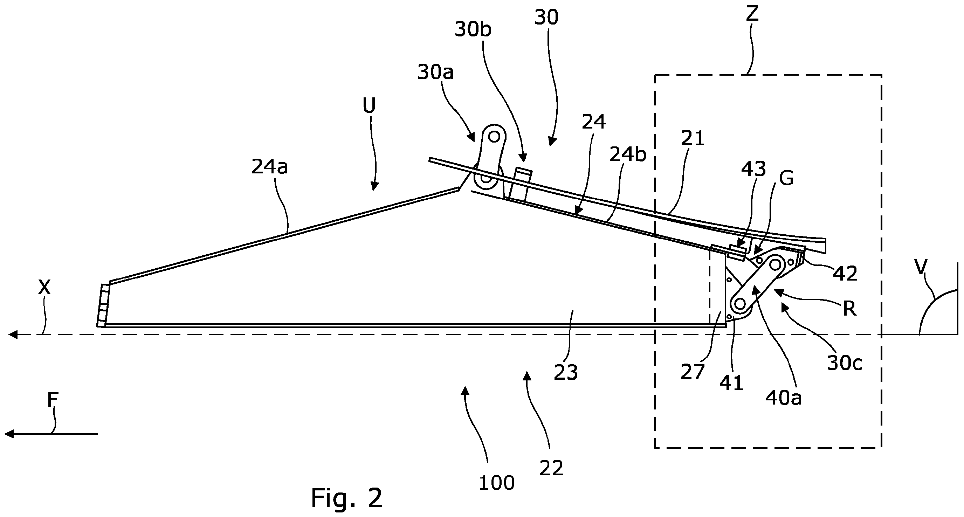

En référence avec les figures 2 et 5, un assemblage 100 d'un mat 22 avec une aile 21 d'un aéronef est réalisé au moyen d'organes de fixation 30. Le mat 22 est fixé de manière isostatique sous l'aile 21 et est destiné à supporter un turboréacteur (non représenté) fixé sous le mat 22.

Dans la description, les termes relatifs à une position sont pris en référence par rapport à la flèche F représentant la direction d'avancement de l'aile 21/mât 22 dans l'air lorsque sous l'effet de la poussée fournie par le turboréacteur.

De manière connue, le mât 22 comprend une structure primaire 23 sous forme d'un caisson rigide qui s'étend d'avant en arrière en longueur selon un axe longitudinal X, parallèle à la direction d'avancement F de l'aéronef.

On appelle plan médian longitudinal V, le plan parallèle à l'axe longitudinal X, orthogonal au sol (c'est-à-dire à l'horizontale) et qui divise la structure primaire 23 en deux parties gauche et droite.

La structure primaire 23 comprend un longeron supérieur 24 qui forme la face supérieure U du caisson et qui est arrangé en regard de l'aile 21 sous laquelle est monté le mât 22. Une nervure 27 (visible en transparence à la figure 2), située à l'extrémité arrière du caisson, s'étend perpendiculairement au plan médian longitudinal V et ferme le caisson pour former la face arrière R de ce dernier.

Les organes de fixation 30 comprennent classiquement un système avant de fixation 30a du mât 22 à l'aile 21 arrangé sur la face supérieure U de la structure primaire 23 globalement à mi-longueur de cette dernière, un système arrière de fixation 30c du mât 22 à l'aile 21 disposé à l'arrière de la structure primaire 23, et un système intermédiaire de fixation 30b du mât 22 à l'aile 21 disposé sur la face supérieure U entre le système avant et le système arrière de fixation 30a, 30c.

Dans le mode de réalisation illustré à la figure 2, le système avant de fixation 30a et le système intermédiaire de fixation 30b sont de conceptions identiques à ceux de l'art antérieur tels que décrits plus haut en relation avec la figure 1 et ne seront pas décrits plus avant. Le système avant de fixation 30a est prévu pour reprendre les efforts verticaux (dans le plan médian longitudinal V et perpendiculairement à l'axe longitudinal X), tandis que le système de fixation intermédiaire 30b est prévu pour reprendre les efforts transversaux (perpendiculaires au plan médian longitudinal V) et longitudinaux.

Le système arrière de fixation 30c comprend :
- une ferrure 41 fixée sur la face arrière du mat R,
- un sabot 42, 142 fixé sous l'aile 21, situé à l'arrière du mât 22, et relié, d'un part, au travers d'au moins une bielle 40a,140a articulée, à la ferrure 41 via une articulation dont l'axe l'articulation 45,145 dit axe d'articulation horizontal, est perpendiculaire au plan médian longitudinal V, et relié d'autre part, au longeron supérieur 24c du mât 22 via un système de reprise d'effort G.

La ferrure 41 comprend un plateau plan 41a et une patte de fixation plane 41b, fixée au plateau 41a, et s'étendant perpendiculairement à ce dernier. Le plateau plan 41a est fixé à la structure primaire 23 (plus précisément à la nervure arrière 27), par soudure ou vissage, et s'étend dans les limites du caisson en considérant une coupe transversale de ce dernier. La patte de fixation plane 41b s'étend vers l'arrière de la structure primaire 23 dans le plan médian longitudinal V, et comprend un alésage traversant 41c dont l'axe est orienté transversalement au plan médian longitudinal V. L'alésage 41c de la patte de fixation 41b de la ferrure 41 est équipé d'un palier à rotule 41d

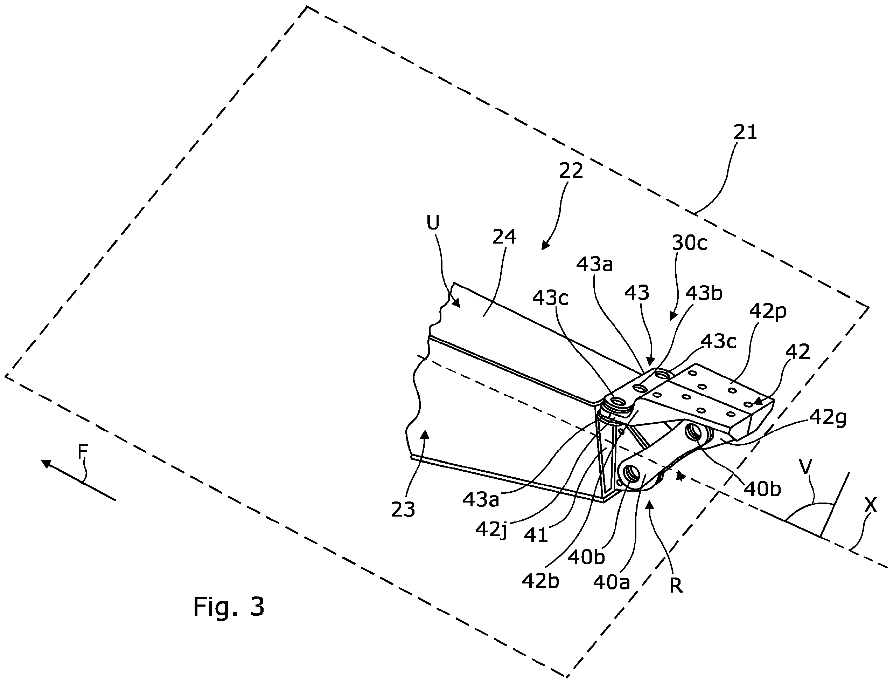

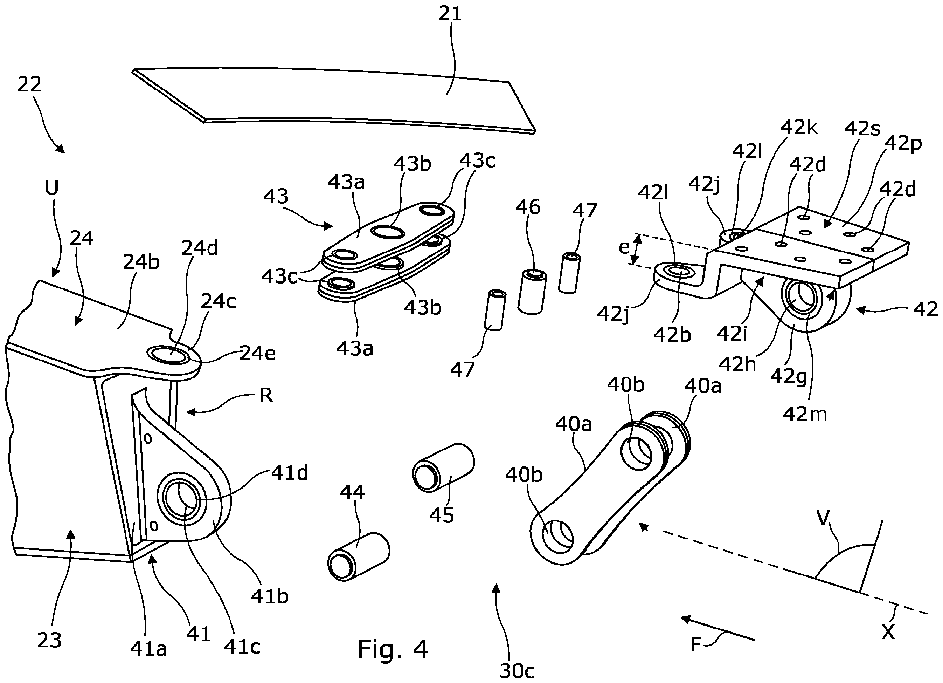

Selon l'invention, et en relation avec les figures 2 à 4, le système de reprise d'effort G comprend une extension 24c (visible à la figure 4) qui prolonge le longeron supérieur 24 du mat 22 vers l'arrière, au-delà de la face arrière R du mat 22 et palonnier 43, le sabot 42 étant articulé, au travers du palonnier 43, à l'extension 24c via une articulation dont l'axe l'articulation 46, dit axe d'articulation vertical, est parallèle au plan médian longitudinal V.

Le sabot 42 présente une section globalement en forme S selon une coupe longitudinale. Le sabot 42 comprend un plateau plan 42p plaqué contre l'aile 21 et fixé sous cette dernière et une portion avant 42b située à l'avant du plateau 42, s'étendant vers le bas et perpendiculairement au plan du plateau 42p, et sur laquelle sont arrangées deux pattes de fixations planes 42j, dites pattes de fixations horizontales, s'étendant vers l'avant du sabot 42, et parallèlement au plan du plateau 42p.

Le plateau 42p comprend une face supérieure plane 42s et une face inférieure 42i. Le plateau 42p est fixé à l'aile 21 au niveau de sa face supérieure 42s, plaquée contre l'aile 21. Afin d'assurer la fixation du plateau 42p à l'aile 21 (par exemple à une nervure de l'aile, ou une ferrure dédiée qui est solidaire de la structure de l'aile), une pluralité d'orifices traversant 42d pour le passage de fixations (par exemple des vis) assurant la fixation du sabot 42 à l'aile 21 est arrangé sur le plateau 42p. Une patte de fixation plane 42g, dite patte de fixation verticale, s'étendant perpendiculairement à la face inférieure du plateau 42p, est arrangée sur la face inférieure 42i du plateau dans la partie médiane du plateau 42 p (c'est-à-dire que la patte de fixation verticale 42g s'étend dans le plan médian longitudinal V lorsque le sabot 42 est fixé sous l'aile 21).

La patte de fixation verticale 42g comprend un alésage traversant 42h dont l'axe d'alésage est orienté transversalement au plan médian V. L'alésage traversant 42h de la patte de fixation verticale 42g est équipé d'un palier à rotule 42m.

Les deux pattes de fixation horizontales 42j sont espacées l'une de l'autre et arrangées symétriquement par rapport au plan médian longitudinal V. Chacune des pattes de fixation horizontale 42j comprend un alésage traversant 42k dont l'axe d'alésage est perpendiculaire à la surface supérieure plane 42s du plateau 42p. L'alésage traversant 42k de chaque patte de fixation horizontale 42j est équipé d'un palier à rotule 421.

La plus petite distance e entre une patte de fixation horizontale 42j du sabot 42 et la face supérieure 42s du plateau 42p est identique pour chaque patte de fixation horizontale 42j.

L'extension 24c du longeron supérieur est plane et prolonge longitudinalement le longeron supérieur 24 vers l'arrière, au-delà du caisson, c'est-à-dire au-delà de la face arrière R de la structure primaire 23. L'extension 24c comprend un alésage traversant 24d dont l'axe d'alésage est compris dans le plan médian longitudinal V et perpendiculaire au plan de l'extension 24c. L'alésage traversant 24d est équipé d'un palier à rotule 24e.

L'extension 24c a une extrémité arrondie de sorte se loger dans l'espace entre les deux pattes de fixations horizontales 42j du sabot 42.

Le palonnier 43 est formé par au moins une bielle trois-points 43a, de forme droite, qui comprend trois alésages traversants alignés dont un alésage central 43b pour le passage de l'axe d'articulation vertical 46, et deux alésages d'extrémité 43c de part et d'autre de l'alésage central 43b.

Chaque bielle 40a reliant le sabot 42 à la ferrure 41 est une bielle deux-points 40a, de forme droite, avec un alésage traversant 40b à chaque extrémité de la bielle, et où la bielle est montée articulée à ses deux extrémités d'une part à la ferrure 41 et d'autre part au sabot 42

Afin d'assurer une redondance des chemins d'efforts en cas de défaillance (logique dite « fail safe »), et particulièrement visible à la figure 4, le sabot 42 est avantageusement relié à la ferrure 41 par deux bielles 40a identiques et disposés de part et d'autre de la ferrure 41 et de la patte de fixation verticale 42g.

L'articulation des bielles 40a est assurée :
- au niveau de la ferrure 41 : par une liaison de type chape avec un axe doublé 44 orienté transversalement par rapport à l'axe longitudinal X. L'axe doublé 44 est emmanché dans le palier à rotule (non représenté) de la patte de fixation 41b de la ferrure 41 et de chaque côté de ce palier à rotule, dans un manchon (non représenté) monté dans l'alésage traversant 40b d'une bielle deux-points 40a ;
- au niveau du sabot 42 : par une liaison de type chape avec l'axe d'articulation horizontal 45 orienté transversalement par rapport à l'axe longitudinal X. L'axe d'articulation horizontal 45 est emmanché dans le palier à rotule 42m de la patte de fixation verticale 42g du sabot 42 et de part et d'autre du palier à rotule 42m, dans un manchon (non représenté) monté dans l'alésage 40b traversant d'une bielle deux-points 40a. Dans une logique de redondance, l'axe d'articulation horizontal 45 est doublé.

Les bielles deux-points 40a sont ainsi orientées chacune de bas en haut dans un plan parallèle au plan médian longitudinal V du mât 22 et l'ensemble mât / paire de bielles deux-points/ sabot permet une reprise des efforts verticaux lorsque le mât 22 est monté sous l'aile 21 de l'aéronef et supporte un turboréacteur.

Les bielles trois-points 43a du palonnier 43 prennent en sandwich le longeron supérieur 24, d'une part, et les pattes de fixations horizontales 42j du sabot, d'autre part.

La fixation des bielles trois-points 43a du palonnier 43 à la structure primaire 22 est assurée par une liaison de type chape avec l'axe d'articulation vertical 46 orienté verticalement, c'est-à-dire perpendiculairement à l'axe longitudinal X et parallèlement au plan médian longitudinal V. L'axe d'articulation vertical 46 est emmanché dans le palier à rotule 24e de l'extension 24c du longeron supérieur et, de part et d'autre de ce palier à rotule, dans un manchon (non représenté) monté dans l'alésage traversant central 43b d'une bielle trois-points 43a. Les bielles trois-points 43a sont orientées quasiment horizontalement et transversalement par rapport à l'axe longitudinal X. Dans une logique de redondance, l'axe d'articulation vertical 46 est doublé.

La fixation des bielles trois-points 43a à chacune des pattes de fixation horizontale 42j du sabot est assurée par une liaison de type chape avec un axe 47 orienté verticalement. L'axe 47 est emmanché dans le palier à rotule 42k de la patte de fixation horizontale 42j et de part et d'autre de ce palier à rotule, dans un manchon (non représenté) monté dans l'alésage traversant d'extrémité 43c d'une bielle trois-points.

Un axe 47 est monté sans jeu au niveau d'une patte de fixation horizontale 42j, tandis que l'autre axe 47 est monté avec jeu au niveau de l'autre patte de fixation horizontale 42j. L'axe 47 monté avec jeu est un axe de sécurité en attente qui sera enclenché en cas de rupture de l'axe monté 47 sans jeu.

Les bielles 43a du palonnier 43 sont ainsi orientées chacune dans un plan perpendiculaire au plan médian longitudinal V et l'ensemble mât /palonnier/sabot permet une reprise des efforts transversaux et longitudinaux lorsque le mât 22 est monté sous l'aile 21 de l'aéronef et supporte un turboréacteur.

La plus petite distance e entre une patte de fixation horizontale 42j du sabot 42 et la face supérieure 42s du grand plateau 42a du sabot a une valeur légèrement supérieure à la largeur (épaisseur) du palonnier 43 afin de permettre un débattement du palonnier 43 situé entre l'aile 21 et la patte de fixation horizontale 42j.

Des mesures ont permis d'établir que la distance maximale entre l'aile 21 et l'arrière du mât 11 pouvait être réduite de moitié avec le système arrière de fixation 30c selon l'invention. Ainsi, grâce à l'invention, le mât 22 est fixé au plus près de l'aile 21.En outre, le positionnement de la paire de bielles trois-points 43 au plus près de l'aile 21 permet de réduire l'introduction de moments secondaires dans l'assemblage.

## Revendications

1. Assemblage (100) d'un mât (22) avec une aile (21) d'aéronef, le mât (22) comportant une structure primaire (23) s'étendant d'avant en arrière selon un axe longitudinal (X) et ayant la forme d'un caisson avec une face arrière (R) et un longeron supérieur (24) formant une face supérieure (U) du caisson, un plan médian longitudinal (V) séparant la structure primaire (23) en deux parties gauche-droite, l'assemblage comprenant un système avant de fixation (30a) du mât (22) à l'aile (21) arrangé sur la face supérieure (U) du caisson à mi-longueur de la structure primaire (23), un système arrière de fixation (30c) du mât (22) à l'aile (21) arrangé à l'arrière de la structure primaire (23), et un système intermédiaire de fixation (30b) du mât (22) à l'aile (21) arrangé sur la face supérieure (U) du caisson entre les systèmes de fixation avant et arrière, le système arrière de fixation (30c) comprenant un sabot (42,142) fixé sous l'aile (21) et une ferrure (41) fixée à la face arrière (R) du mât (22), le sabot (42,142) étant relié, via au moins une bielle (40a,140a) articulée, à la ferrure (41) via une articulation dont l'axe l'articulation (45,145), dit axe d'articulation horizontal, est perpendiculaire au plan médian longitudinal (V), le sabot (42,142) étant relié au longeron supérieur (24) via un système de reprise d'effort (G), **caractérisé en ce que** le système de reprise d'effort (G) comprend une extension (24c) prolongeant le longeron supérieur (24) du mât (22) vers l'arrière et un palonnier (43), le sabot (42) étant articulé, au travers du palonnier (43), à l'extension (24c) via une articulation dont l'axe l'articulation (46), dit axe d'articulation vertical, est parallèle au plan médian longitudinal (V).

2. Assemblage (100) selon la revendication 1, **caractérisé en ce que** l'extension (24c) comprend un alésage traversant (24d) équipé d'un palier à rotule (24e) et **en ce que** l'axe d'articulation vertical (46) est monté dans ledit palier à rotule.

3. Assemblage (100) selon l'une quelconque des revendications 1 à 2, **caractérisé en ce que** le sabot (42) présente une section globalement en forme de S et comprend un plateau plan (42p) fixé à l'aile (21) et une portion avant (42b) située à l'avant du plateau (42) et s'étendant perpendiculairement à un plan du plateau (42p) et sur laquelle sont arrangées deux pattes de fixations planes (42j), dites pattes de fixation horizontales, arrangées de part et d'autre du plan longitudinal médian (V) et s'étendant vers l'avant du sabot (42), et parallèlement au plan du plateau (42p), où chaque patte de fixation horizontale (42j) comprend un orifice traversant (42k) équipé d'un palier à rotule (421).

4. Assemblage (100) selon la revendication 3, **caractérisé en ce que** le palonnier (23) est formé par au moins une bielle (43a), chaque bielle (43a) comprenant trois alésages traversants dont un alésage central (43b) recevant l'axe d'articulation vertical (46), et deux alésages d'extrémité (43c) de part et d'autre de l'alésage central (43b), où chaque alésage d'extrémité (43c) reçoit un axe d'articulation (47) monté dans le palier à rotule (421) associé à une patte de fixation horizontale (42j).

5. Assemblage (100) selon la revendication 4, **caractérisé en ce que** pour une patte de fixation horizontale (42j), l'axe d'articulation (47) est monté dans le palier à rotule (421) associé avec jeu, tandis que pour l'autre patte de fixation horizontale (42j), l'axe d'articulation (47) est monté dans le palier à rotule (421) associé sans jeu.

6. Assemblage (100) selon l'une quelconque des revendications 3 à 5, **caractérisé en ce que** le plateau (42p) comprend une face supérieure plane (42s) plaquée contre l'aile (21) et une face inférieure (42i), et **en ce qu'**une patte de fixation plane (42g), dite patte de fixation verticale, est arrangée sur la face inférieure (42i) du plateau et s'étend dans le plan médian longitudinal (V), la patte de fixation verticale (42g) comprenant un orifice traversant (42h) équipé d'un palier à rotule (42m) dans lequel est monté l'axe d'articulation horizontal (45).

## Patentansprüche

1. Baueinheit (100) aus einem Pylon (22) und einem Tragflügel (21) eines Luftfahrzeugs, wobei der Pylon (22) eine Primärstruktur (23) aufweist, die sich entlang einer Längsachse (X) von vorn nach hinten erstreckt und die Form eines Kastens mit einer Hinterseite (R) und einem oberen Holm (24), der eine Oberseite (U) des Kastens bildet, aufweist, wobei eine Mittellängsebene (V) die Primärstruktur (23) in zwei Teile, einen linken und einen rechten, teilt, wobei die Baueinheit ein vorderes System zur Befestigung (30a) des Pylons (22) am Tragflügel (21), das auf der Oberseite (U) des Kastens in Längsmitte der Primärstruktur (23) angeordnet ist, ein hinteres System zur Befestigung (30c) des Pylons (22) am Tragflügel (21), das hinten an der Primärstruktur (23) angeordnet ist, und ein dazwischenliegendes System zur Befestigung (30b) des Pylons (22) am Tragflügel (21), das auf der Oberseite (U) des Kastens zwischen dem vorderen und dem hinteren Befestigungssystem angeordnet ist, umfasst, wobei das hintere Befestigungssystem (30c) einen Schuh (42, 142), der unter dem Tragflügel (21) befestigt ist, und ein Beschlagteil (41), das an der Hinterseite (R) des Pylons (22) befestigt ist, umfasst, wobei der Schuh (42, 142) über wenigstens eine Gelenkstange (40a, 140a) mit dem Beschlagteil (41) über ein Gelenk verbunden ist, dessen Gelenkbolzen (45, 145), horizontaler Gelenkbolzen genannt, senkrecht zur Mittellängsebene (V) ist, wobei der Schuh (42, 142) mit dem oberen Holm (24) über ein Kraftaufnahmesystem (G) verbunden ist, **dadurch gekennzeichnet, dass** das Kraftaufnahmesystem (G) eine Verlängerung (24c), die den oberen Holm (24) des Pylons (22) nach hinten verlängert, und eine Traverse (43) umfasst, wobei der Schuh (42) durch die Traverse (43) hindurch an der Verlängerung (24c) über ein Gelenk angelenkt ist, dessen Gelenkbolzen (46), vertikaler Gelenkbolzen genannt, parallel zur Mittellängsebene (V) ist.

2. Baueinheit (100) nach Anspruch 1, **dadurch gekennzeichnet, dass** die Verlängerung (24c) eine Durchgangsbohrung (24d) umfasst, die mit einem Pendellager (24e) ausgestattet ist, und dadurch, dass der vertikale Gelenkbolzen (46) in dem Pendellager gelagert ist.

3. Baueinheit (100) nach einem der Ansprüche 1 bis 2, **dadurch gekennzeichnet, dass** der Schuh (42) einen im Wesentlichen S-förmigen Querschnitt aufweist und eine ebene Platte (42p) umfasst, die am Tragflügel (21) befestigt ist, und einen vorderen Abschnitt (42b), der sich vor der Platte (42) befindet und sich senkrecht zu einer Ebene der Platte (42p) erstreckt und an dem zwei Befestigungslaschen (42j) angeordnet sind, horizontale Befestigungslaschen genannt, die beiderseits der Mittellängsebene (V) angeordnet sind und sich vom Schuh (42)aus nach vorn und parallel zur Ebene der Platte (42p) erstrecken, wobei jede horizontale Befestigungslasche (42j) eine Durchgangsöffnung (42k) umfasst, die mit einem Pendellager (421) ausgestattet ist.

4. Baueinheit (100) nach Anspruch 3, **dadurch gekennzeichnet, dass** die Traverse (23) von wenigstens einem Pleuel (43a) gebildet wird, wobei jeder Pleuel (43a) drei Durchgangsbohrungen umfasst, darunter eine mittlere Bohrung (43b), die den vertikalen Gelenkbolzen (46) aufnimmt, und zwei Endbohrungen (43c) beiderseits der mittleren Bohrung (43b), wobei jede Endbohrung (43c) einen Gelenkbolzen (47) aufnimmt, der in dem Pendellager (421) gelagert ist, das einer horizontalen Befestigungslasche (42j) zugeordnet ist.

5. Baueinheit (100) nach Anspruch 4, **dadurch gekennzeichnet, dass** bei einer horizontalen Befestigungslasche (42j) der Gelenkbolzen (47) in dem zugeordneten Pendellager (421) mit Spiel gelagert ist, während bei der anderen horizontalen Befestigungslasche (42j) der Gelenkbolzen (47) in dem zugeordneten Pendellager (421) ohne Spiel gelagert ist.

6. Baueinheit (100) nach einem der Ansprüche 3 bis 5, **dadurch gekennzeichnet, dass** die Platte (42p) eine ebene Oberseite (42s), die gegen den Tragflügel (21) gedrückt wird, und eine Unterseite (42i) umfasst, und dadurch, dass eine ebene Befestigungslasche (42g), vertikale Befestigungslasche genannt, an der Unterseite (42i) der Platte angeordnet ist und sich in der Mittellängsebene (V) erstreckt, wobei die vertikale Befestigungslasche (42g) eine Durchgangsbohrung (42h) umfasst, die mit einem Pendellager (42m) ausgestattet ist, in welchem der horizontale Gelenkbolzen (45) gelagert ist.

## Claims

1. Assembly (100) of a pylon (22) with an aircraft wing (21), the pylon (22) comprising a primary structure (23) extending from front to rear along a longitudinal axis (X) and having the form of a box with a rear face (R) and an upper spar (24) forming an upper face (U) of the box, a longitudinal mid-plane (V) separating the primary structure (23) into two left-right parts, the assembly comprising a front fastening system (30a) for fastening the pylon (22) to the wing (21) that is arranged on the upper face (U) of the box halfway along the length of the primary structure (23), a rear fastening system (30c) for fastening the pylon (22) to the wing (21) that is arranged at the rear of the primary structure (23), and an intermediate fastening system (30b) for fastening the pylon (22) to the wing (21) that is arranged on the upper face (U) of the box between the front and rear fastening systems, the rear fastening system (30c) comprising a shoe (42, 142) fastened below the wing (21) and a fitting (41) fastened to the rear face (R) of the pylon (22), the shoe (42, 142) being connected, via at least one articulated link (40a, 140a), to the fitting (41) via an articulation whose articulation pin (45, 145), termed horizontal articulation pin, is perpendicular to the longitudinal mid-plane (V), the shoe (42, 142) being connected to the upper spar (24) via a force take-up system (G), **characterized in that** the force take-up system (G) comprises an extension (24c) prolonging the upper spar (24) of the pylon (22) towards the rear and a spreader (43), the shoe (42) being articulated, by way of the spreader (43), to the extension (24c) via an articulation whose articulation pin (46), termed vertical articulation pin, is parallel to the longitudinal mid-plane (V).

2. Assembly (100) according to Claim 1, **characterized in that** the extension (24c) comprises a through-bore (24d) equipped with a swivel bearing (24e), and **in that** the vertical articulation pin (46) is mounted in said swivel bearing.

3. Assembly (100) according to either one of Claims 1 and 2, **characterized in that** the shoe (42) has a cross section generally in the shape of an S and comprises a planar plate (42p) fastened to the wing (21) and a front portion (42b) situated at the front of the plate (42) and extending perpendicularly to a plane of the plate (42p) and on which are arranged two planar fastening tabs (42j), termed horizontal fastening tabs, arranged on either side of the longitudinal mid-plane (V) and extending towards the front of the shoe (42), and parallel to the plane of the plate (42p), where each horizontal fastening tab (42j) comprises a through-orifice (42k) equipped with a swivel bearing (421).

4. Assembly (100) according to Claim 3, **characterized in that** the spreader (23) is formed by at least one link (43a), each link (43a) comprising three through-bores, including one central bore (43b) receiving the vertical articulation pin (46), and two end bores (43c) on either side of the central bore (43b), where each end bore (43c) receives an articulation pin (47) mounted in the swivel bearing (421) associated with a horizontal fastening tab (42j) .

5. Assembly (100) according to Claim 4, **characterized in that**, for a horizontal fastening tab (42j), the articulation pin (47) is mounted in the associated swivel bearing (421) with play, whereas, for the other horizontal fastening tab (42j), the articulation pin (47) is mounted in the associated swivel bearing (421) without play.

6. Assembly (100) according to any one of Claims 3 to 5, **characterized in that** the plate (42p) comprises a planar upper face (42s) pressed against the wing (21) and a lower face (42i), and **in that** a planar fastening tab (42g), termed vertical fastening tab, is arranged on the lower face (42i) of the plate and extends in the longitudinal mid-plane (V), the vertical fastening tab (42g) comprising a through-orifice (42h) equipped with a swivel bearing (42m) in which the horizontal articulation pin (45) is mounted.
